# EUROPÄISCHE PATENTSCHRIFT

(11) **EP 4 352 003 B1**
(45) Veröffentlichungstag und Bekanntmachung des Hinweises auf die Patenterteilung: **15.07.2026**
(21) Anmeldenummer: 22761531.7
(22) Anmeldetag: 08.08.2022
(51) Int. Cl.: B66C 13/12, B66C 23/26

(54) **NETZGESPEISTE MATERIALUMSCHLAGS- UND/ODER BAUMASCHINE**
GRID-POWERED MATERIAL HANDLING AND/OR CONSTRUCTION MACHINE
MACHINE DE MANUTENTION ET/OU CONSTRUCTION ALIMENTÉE PAR LE RÉSEAU ÉLECTRIQUE

(30) Priorität: 10.09.2021 DE 102021123502
(43) Veröffentlichungstag der Anmeldung: 17.04.2024
(73) Patentinhaber: Liebherr-Werk Biberach GmbH, 88400 Biberach an der Riss (DE)
(72) Erfinder: ASSFALG, Martin, 88448 Attenweiler (DE); GOLLACK, Michael, 88400 Biberach a. d. Riß (DE); KÖNIG, Thomas, 88400 Biberach a. d. Riß (DE); SCHMID, Gerhard, 88284 Wolpertswende (DE)
(74) Vertreter: Lorenz Seidler Gossel Part. mbB
(86) Internationale Anmeldenummer: PCT/EP2022/072242
(87) Internationale Veröffentlichungsnummer: WO 2023/036531

(56) Entgegenhaltungen:
- WO-A1-2022/033982
- CA-A1- 2 142 532
- DE-A1- 102010 063 911
- DE-A1- 102015 008 038
- DE-A1- 102015 225 910
- DE-A1- 102017 222 949
- DE-T5- 112013 001 281
- US-A- 4 358 719

## Beschreibung

Die vorliegende Erfindung betrifft eine netzgespeiste Materialumschlags- und/oder Baumaschine, insbesondere in Form eines Krans wie Turmdrehkrans oder eines anderen Hebezeugs, mit mehreren elektrischen Antrieben zum Antreiben von Arbeitsaggregaten und/oder Strukturteilen der Materialumschlags- und/oder Baumaschine, einer Steuervorrichtung zum Steuern der Antriebe, sowie einer Energieversorgungseinrichtung zum Versorgen der elektrischen Antriebe mit elektrischer Energie, wobei die Energieversorgungseinrichtung einen Netzanschluss zum Anschließen an ein Stromnetz und Speisen der elektrischen Antrieben aus dem Stromnetz aufweist.

Krane wie Turmdrehkrane werden schon seit geraumer Zeit an das am jeweiligen Aufstellungsort verfügbare Stromnetz angeschlossen, um die elektrischen Antriebe des Krans wie beispielsweise dessen Hubwerkantrieb, dessen Drehwerkantrieb, dessen Katzfahrantrieb und ggf. dessen Wippwerkantrieb mit elektrischer Energie zu versorgen. Der Kran besitzt hierzu einen Netzanschluss zum Anschließen an das Stromnetz und Speisen der elektrischen Antriebe aus dem Stromnetz, vgl. DE 10 2010 063 911 A1 und DE 10 2015 008 038 A1. Diverse andere Baumaschinen wie Betonpumpen oder auch generell Materialumschlagsmaschinen wie Erdbewegungsmaschinen in Form von Baggern oder Hebezeuge beispielsweise in Form von Seilbaggern besitzen auch häufig elektrische Antriebe, die jedoch dieselelektrisch von einem Generator versorgt werden, der von einem Dieselmotor betrieben wird. Auch für solche mobilen Arbeitsmaschinen, die bislang dieselelektrische Antriebskonzepte besitzen, geht das Bestreben dahin, die elektrischen Antriebe aus einem Netzanschluss zu speisen, um lokal emissionsfrei arbeiten zu können und immer dort, wo ein Netzanschluss zur Verfügung steht, auf den Netzanschluss der Maschine zurückzugreifen, vgl. auch US 4 358 719 A, DE 10 2017 222 949 A1, CA 2 142 532 A1, DE 11 2013 001 281 T5, DE 10 2015 225 910 A1 und WO 2022/033982 A1.

Eine grundsätzliche Anforderung an eine solche Netzversorgung ist es dabei, den Kran bzw. die Materialumschlags- und/oder Baumaschine möglichst häufig, einfach und sicher elektrisch versorgen zu können, um einen hohen Kundennutzen zu generieren. Die Arbeitsmaschine soll hierzu möglichst nach Art eines Plug-and-Play-Moduls an die lokal vorhandene Netzversorgung angeschlossen werden können, ohne die Maschine hierfür jedes Mal umrüsten zu müssen oder größere Vorkehrungen treffen zu müssen.

Ein Problem besteht dabei darin, dass mobile Arbeitsmaschine wie Krane oder andere Materialumschlags- und/oder Baumaschinen an verschiedenen Orten an verschiedene Stromnetze angeschlossen werden, die unterschiedliche Leistungen bereitstellen und lokal unterschiedlich konfiguriert sind. Dies führt insofern zu Problemen, da ein bestimmter Kran nicht aufgestellt werden kann, wenn das lokal verfügbare Stromnetz nicht die notwendige Leistung bereitstellt bzw. die Materialumschlags- und/oder Baumaschine das lokale Stromnetz überfordern würde.

Die Fremdstromversorgung erfordert an sich eine Netzleistung, die mindestens gleichgroß, besser aber größer ist als die maximale Leistungsaufnahme der Materialumschlags- und/oder Baumaschine, um sicherzustellen, dass auch bei Betätigung aller Antriebe der Arbeitsmaschine die Energieversorgung gewährleistet ist und das Stromnetz nicht überfordert wird. Um letzteres zu schützen, werden bisweilen die Anschlüsse des Stromnetzes durch entsprechende Schutzschalter abgesichert, dass zumindest eine Überlastung des Stromnetzes ausgeschlossen ist. Dies ist jedoch aufwendig und beeinträchtigt auch den Betrieb der an das Netz angeschlossenen Maschine.

Der vorliegenden Erfindung liegt hiervon ausgehend die Aufgabe zugrunde, eine verbesserte Materialumschlags- und/oder Baumaschine zu schaffen, die Nachteile des Standes der Technik vermeidet und letzteren in vorteilhafter Weise weiterbildet. Insbesondere soll eine einfache und sichere elektrische Versorgung der Materialumschlags- und/oder Baumaschine aus verschiedenartig ausgeprägten Stromnetzen ermöglicht werden, die die zur Verfügung stehende Netzleistung beachtet und optimal nutzt, ohne das Netz bzw. die Netzleitung zu überlasten oder hierfür das Netz aufwendig mit Schutzschaltern ausrüsten zu müssen.

Erfindungsgemäß wird die genannte Aufgabe durch eine Materialumschlags- und/oder Baumaschine gemäß Anspruch 1 gelöst. Bevorzugte Ausgestaltungen der Erfindung sind Gegenstand der abhängigen Ansprüche.

Es wird also vorgeschlagen, die Leistungsaufnahme des Krans insgesamt zu messen und in Abhängigkeit des Stromnetzes, an das die Materialumschlags- und/oder Baumaschine angeschlossen ist, gezielt zu steuern und an das Stromnetz anzupassen. Erfindungsgemäß besitzt die Materialumschlags- und/oder Baumaschine eine Messeinrichtung zum Messen der gesamten elektrischen Leistungsaufnahme aus dem Stromnetz an dem maschinenseitigen Netzanschluss. Durch eine solche Messeinrichtung ist stets aktuell bekannt, welche Leistung die Maschine tatsächlich direkt an der Einspeisung abgreift, so dass die Belastung des versorgenden Stromnetzes stets aktuell und präzise bekannt ist.

Das Messsignal der genannten Messeinrichtung, das die gesamte Leistungsaufnahme der Maschine an ihrem Netzanschluss angibt, kann in verschiedener Weise vorteilhaft eingesetzt werden. Beispielsweise kann eine Anzeige im Führerstand die aktuelle Leistungsaufnahme anzeigen. Insbesondere kann das Messsignal aber auch der Steuervorrichtung der Materialumschlags- und/oder Baumaschine zur Verfügung gestellt werden, um automatisch oder halbautomatisch Maßnahmen zu ergreifen, die eine Überlastung des Stromnetzes vermeiden. Hierdurch kann die Materialumschlags- und/oder Baumaschine auch an Netzen betrieben werden, die an sich eine geringere Leistung zur Verfügung stellen als die Materialumschlags- und/oder Baumaschine im Normalfall bzw. im Betrieb mit maximaler Leistung benötigt.

Erfindungsgemäß ist die Steuervorrichtung dazu ausgebildet, die gemessene, gesamte elektrische Leistungsaufnahme mit einer von dem Stromnetz maximal zur Verfügung stellbaren Leistung zu vergleichen und in Abhängigkeit des genannten Vergleichs die Leistungsaufnahme eines oder mehrerer elektrischer Antriebe zu reduzieren. Stellt die Messeinrichtung fest, dass sich die gesamte elektrische Leistungsaufnahme der Materialumschlags- und/oder Baumaschine der maximal vom Stromnetz zur Verfügung stellbaren Leistung annähert oder diese gar erreicht, sieht die Steuervorrichtung eine Leistungsbegrenzung eines oder mehrerer elektrischer Antriebe vor, um zu verhindern, dass die gesamte Leistungsaufnahme der Maschine weiter ansteigt und das jeweils angebundene Stromnetz überlastet.

Eine solche Leistungsreduzierung oder -begrenzung kann von der Steuervorrichtung in verschiedener Weise umgesetzt werden. Beispielsweise kann die Steuervorrichtung die Stellgeschwindigkeit(en) eines oder mehrerer Antriebe reduzieren und/oder begrenzen, um die Leistungsaufnahme an den jeweiligen Antrieben zu reduzieren oder zu begrenzen, wenn sich die gemessene gesamte Leistungsaufnahme der Maschine der zur Verfügung stellbaren Netzleistung annähert oder erreicht oder gar überschreitet.

Erfindungsgemäß ist die Steuervorrichtung dazu ausgebildet, Steuerbefehle zum Steuern der elektrischen Antriebe, die von einem Maschinenführer über Eingabemittel wie Joysticks, Schieber, Regler oder Drehknöpfe eingegeben werden oder von einer automatischen Verfahrsteuerung vorgegeben werden, in Abhängigkeit des genannten Vergleichs der gemessenen Leistungsaufnahme am Netzanschluss mit der zur Verfügung stellbaren Netzleistung zu skalieren bzw. umzuskalieren und auf einen vorbestimmten, gegenüber dem maximalen möglichen Steuerbefehlswert reduzierten Wert zu begrenzen. Gibt beispielsweise der Maschinenführer beispielsweise durch Verkippen des Joysticks einen Stellbewegungswunsch mit maximaler Geschwindigkeit ein, beispielsweise an einem Kran das Anheben des Lasthakens mit maximaler Hubgeschwindigkeit vor, kann die Steuervorrichtung dazu ausgebildet sein, den besagten Steuerbefehl "Verfahren bzw. Heben mit maximaler Stellgeschwindigkeit" auf einen niedrigeren Steuerbefehl von beispielsweise 75% der maximalen Stellgeschwindigkeit zu reduzieren und sozusagen den vom Maschinenführer oder dem automatisierten Steuerungsmodul vorgegebenen Steuerbefehl zu übersteuern, so dass an den elektrischen Antrieb nur ein reduziertes Steuersignal gegeben wird.

Die Steuervorrichtung kann dabei dazu ausgebildet sein, eine Leistungsreduzierung gleichmäßig für alle vorhandenen oder alle aktuell betriebenen elektrischen Antriebe vorzusehen, beispielsweise alle elektrischen Antriebe hinsichtlich ihrer Stellgeschwindigkeit auf einen vorbestimmten Bruchteil ihrer maximalen Stellgeschwindigkeit zu begrenzen, wenn die von der Messeinrichtung gemessene, gesamte Leistungsaufnahme am Netzanschluss die zur Verfügung stellbare Netzleistung erreicht oder sich dieser annähert oder gar überschreitet. Alternativ zu einer solchen gleichmäßigen Leistungsreduzierung aller Antriebe kann die Steuervorrichtung aber auch dazu ausgebildet sein, für verschiedene Antriebe verschiedene leistungsreduzierende Maßnahmen vorzusehen, beispielsweise das Hubwerk eines Krans auf 75 % der maximalen Stellgeschwindigkeit zu reduzieren und für das Drehwerk des Krans und/oder das Katzfahrwerk des Krans keine oder eine geringere oder ggf. auch eine stärkere Geschwindigkeitsbegrenzung oder -reduzierung vorzusehen. Beispielsweise kann die Steuervorrichtung eine stärkere Leistungsreduzierung oder -begrenzung für einen Antrieb vorsehen, der eine hohe Leistungsaufnahme besitzt, und eine geringere oder keine Leistungsreduzierung oder -begrenzung für einen anderen Antrieb vorsehen, der eine vergleichsweise geringere Leistungsaufnahme besitzt.

Alternativ oder zusätzlich zu einer Leistungsreduzierung oder -begrenzung eines oder mehrerer Antriebe kann die Steuervorrichtung in Abhängigkeit des Vergleichs zwischen gemessener Leistungsaufnahme am maschinenseitigen Netzanschluss und zur Verfügung stellbarer Netzleistung auch einen Energieversorgungsspeicher zuschalten und/oder die Leistungsentnahme aus dem Energieversorgungsspeicher zum Versorgen der elektrischen Antriebe erhöhen. Beispielsweise kann die Materialumschlags- und/oder Baumaschine einen oder mehrere Akkus oder andere Energiespeicher zum Einspeichern von elektrischer Energie wie beispielsweise Kondensatoren aufweisen, die zusätzlich zum Netzanschluss elektrische Energie für die Antriebe bereitstellen können. Nähert sich die gemessene tatsächliche gesamte Leistungsaufnahme der Maschine der zur Verfügung stellbaren Netzleistung an oder erreicht diese oder überschreitet diese gar, kann die Steuervorrichtung den Energiespeicher der Maschine zuschalten oder die Leistungsaufnahme daraus erhöhen, um die Belastung des Stromnetzes zu reduzieren oder zu begrenzen.

Die Steuervorrichtung kann dabei vorrangig eine Leistungsentnahme über den Netzanschluss aus dem Stromnetz vorsehen und den Energiespeicher nur dann zuschalten oder die Leistungsentnahme hieraus nur soweit erhöhen, dass die Leistungsentnehme aus dem Netz dessen zur Verfügung stellbare Netzleistung nicht überschreitet oder im Vergleich dazu ein vorbestimmtes Niveau nicht überschreitet. Alternativ oder zusätzlich kann die Steuervorrichtung aber auch den Speicherzustand des Energieversorgungsspeichers berücksichtigen, um den Stromverbrauch aus dem Stromnetz zu reduzieren und/oder eine effiziente Nutzung der eingespeicherten Energie sicherzustellen. Besitzt beispielsweise der Energiespeicher ein vorbestimmtes Ladungsniveau oder überschreitet das Ladungsniveau einen bestimmten Schwellwert, kann die Steuervorrichtung den Energiespeicher zuschalten bzw. die Leistungsentnahme hieraus erhöhen auch dann, wenn die gesamte Leistungsaufnahme der Maschine an sich noch nicht die zur Verfügung stellbare maximale Netzleistung erreicht oder sich dieser annähert. Eine solche vorrangige Leistungsentnahme aus dem Energieversorgungsspeicher kann beispielsweise dann sinnvoll sein, wenn eine in einem Kondensator rückgespeicherte Energiemenge ein vorbestimmtes Niveau erreicht, die eine Wiederverwertung der gespeicherten Energie sinnvoll erscheinen lässt.

Um das Anschließen der Maschine an verschiedene Stromnetze einfach zu gestalten, kann die Steuervorrichtung in Weiterbildung der Erfindung eine Eingabeschnittstelle besitzen, über die die vom jeweils anzuschließenden Stromnetz maximal zur Verfügung stellbare Leistung eingebbar ist. Die über die Eingabeschnittstelle zur Verfügung gestellte maximale Netzleistung kann die Steuervorrichtung dann für den genannten Vergleich mit dem Messsignal der Messeinrichtung verwenden, das die tatsächliche, gesamte Leistungsaufnahme der Maschine angibt.

Die genannte Eingabeschnittstelle kann mit einem manuellen Eingabemittel wie beispielsweise einem Touchscreen oder auch einem Spracherkennungssystem verbunden sein, über das ein Maschinenführer bzw. ein Rüstmonteur die Netzleistung des jeweils anzuschließenden Stromnetzes manuell eingeben kann.

Alternativ oder zusätzlich kann aber auch eine automatisierte Eingabe erfolgen, wenn das Stromnetz eine Kennung bereitstellt, die die maximale Netzleistung angibt. In diesem Fall kann die Steuervorrichtung der Maschine die genannte Kennung einlesen und dem Vergleich des Messsignals der Messeinrichtung zugrundelegen.

Um für das Anschließen der Materialumschlags- und/oder Baumaschine an das Stromnetz keine besonderen Sicherungsmaßnahmen auf der Stromnetzseite vorsehen zu müssen, kann nach einem weiteren Aspekt der vorliegenden Erfindung an dem maschinenseitigen Netzanschluss ein auf das anzuschließende Stromnetz abgestimmter Schutzschalter vorgesehen sein, der dazu ausgelegt ist, den Anschluss zum Stromnetz zu unterbrechen, wenn die gesamte Leistungsaufnahme der Maschine die maximal zur Verfügung stellbare Leistung des Stromnetzes bzw. ein bestimmtes, darauf abgestimmtes Niveau erreicht. Insbesondere ist der genannte Schutzschalter hinsichtlich seines Bemessungs-Fehlerstroms, bei dem der Schutzschalter abschaltet, an das Stromnetz angepasst, insbesondere dessen maximal zur Verfügung stellbaren Leistung.

Der genannte Schutzschalter kann insbesondere einen allstromsensitiven Fehlerstrom-Schutzschalter umfassen, der im Bereich des Netzanschlusses der Maschine verbaut ist derart, dass die gesamte, über den Netzanschluss bezogene Leistung der Maschine über den genannten allstromsensitiven Fehlerstrom-Schutzschalter geht. Erreicht die tatsächliche, gesamte Leistungsaufnahme der Maschine das Niveau des Bemessungs-Fehlerstroms des allstromsensitiven Fehlerstrom-Schutzschalters, schaltet letzterer ab und trennt die Maschine vom Stromnetz.

Vorteilhafterweise kann der Schutzschalter hinsichtlich seines Bemessungs-Fehlerstroms, bei dessen Erreichen der Schutzschalter abschaltet, einstellbar ausgebildet sein, um beim Anschließen der Maschine an verschiedene Stromnetze an das jeweils anzuschließende Stromnetz angepasst werden zu können. Beispielsweise kann der Bemessungs-Fehlerstrom in Abhängigkeit der über die vorgenannte Eingabeschnittstelle eingegebene maximale Netzleistung angepasst werden, vorzugsweise über die genannte Steuervorrichtung der Maschine, der die maximale Netzleistung des anzuschließenden Stromnetzes für den beschriebenen Vergleich mit der gemessenen tatsächlichen Leistungsaufnahme zur Verfügung gestellt wird.

Alternativ oder zusätzlich kann aber auch einfach ein alternativ konfigurierter Schutzschalter am Netzanschluss der Maschine montiert werden, der jeweils an das anzuschließende Stromnetz angepasst ist, was seinen Bemessungs-Fehlerstrom angeht.

Die Erfindung wird nachfolgend anhand eines bevorzugten Ausführungsbeispiels und zugehörigen Zeichnungen näher erläutert. **In** den Zeichnungen zeigen:
- Fig. 1:: eine Materialumschlags- und/oder Baumaschine in Form eines Turmdrehkrans nach einer vorteilhaften Ausführung der Erfindung, die über einen Netzanschluss an ein auf einer Baustelle vorhandenes Stromnetz angeschlossen werden kann, und
- Fig. 2:: einen Schaltplan des Netzanschlusses der Materialumschlags- und/oder Baumaschine aus Fig. 1, die die am Netzanschluss vorgesehene Messeinrichtung und den dort vorgesehenen allstromsensitiven Fehlerstromschutzschalter zeigt.

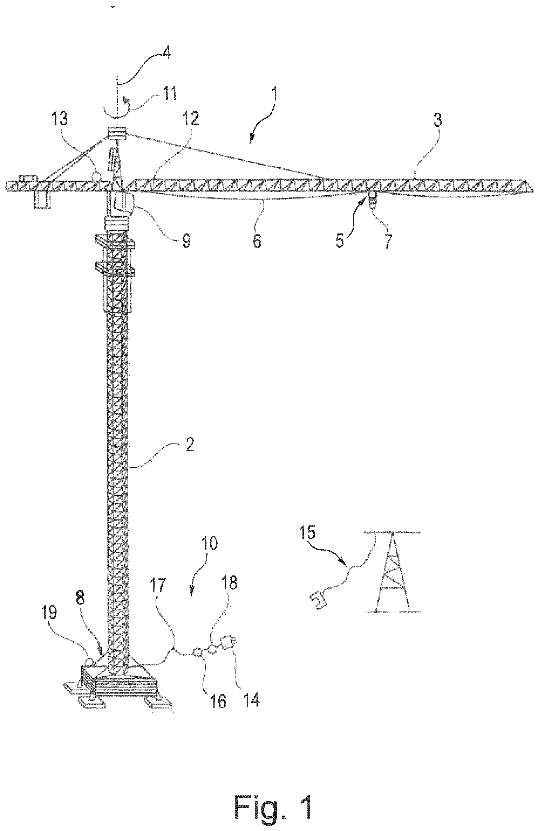

Wie Fig. 1 zeigt, kann die Materialumschlags- und/oder Baumaschine 1 als Kran, insbesondere Turmdrehkran ausgebildet sein, die als Strukturbauteile einen Turm 2 und einen davon getragenen Ausleger 3 umfasst, der von einer Abspannung gehalten und über ein Ballastgewicht an einem Gegenausleger ausbalanciert werden kann.

Die Materialumschlags- und/oder Baumaschine 1 umfasst mehrere elektrische Antriebe 11, 12 und 13, wobei dies im Falle eines Krans ein Drehwerksantrieb 11, ein Katzfahrantrieb 12 und ein Hubwerksantrieb 13 sein kann. Wie Fig. 1 zeigt, kann an dem genannten Ausleger 3 eine Laufkatze 4 verfahrbar gelagert sein, die durch den genannten Katzfahrantrieb 12 entlang des Auslegers 3 verfahren werden kann, wobei der Katzfahrantrieb 12 einen Elektromotor umfassen kann, der ein Katzfahrseil auf einer Winde auf- und abspulen oder nach Art einer Spillwinde umtreiben kann.

Von der genannten Laufkatze 4 kann ein Hubseil 6 ablaufen, welches ein Lastaufnahmemittel wie beispielsweise einen Lasthaken 7 trägt. Der Hubwerksantrieb 13 kann das besagte Hubseil 6 auf einer Winde auf- und abspulen und einen Elektromotor zum Antreiben der Winde umfassen.

Der Ausleger 3 kann ferner durch den Drehwerksantrieb 11 um eine aufrechte Achse, insbesondere die Turmlängsachse rotatorisch angetrieben werden. Bei Ausbildung als Obendreher kann der Ausleger 3 gegenüber dem Turm 2 verdreht werden, während bei einem Untendreher der Ausleger 3 zusammen mit dem Turm 2 um die genannte aufrechte Achse 4 verdreht wird.

Die genannten elektrischen Antriebe in Form der Drehwerks-, Katzfahr- und Hubwerksantriebe 11, 12 und 13 werden von einer Steuervorrichtung 8 angesteuert, wobei die Steuervorrichtung 8 elektronisch ausgebildet sein und einen Mikroprozessor sowie einen daran angeschlossenen Programmspeicher aufweisen kann. Die Steuervorrichtung 8 kann insbesondere Steuerbefehle umsetzen, die ein Kranführer im Führerstand 9 über geeignete Eingabemittel wie Joysticks und dergleichen eingeben kann.

Eine Energieversorgungseinrichtung 10 zum Versorgen der genannten elektrischen Antriebe 11, 12, 13 mit elektrischer Energie umfasst einen Netzanschluss 14, durch den die Materialumschlags- und/oder Baumaschine 1 elektrische Energie aus einem Stromnetz 15 beziehen kann, welches den räumlichen Bereich einer jeweiligen Baustelle bzw. eines jeweiligen Aufstellorts bzw. Betriebsorts versorgt und beispielsweise das Versorgungsnetz des jeweiligen Versorgungsunternehmens sein kann.

Der genannte Netzanschluss 14 kann insbesondere einen mehrpoligen Netzstecker umfassen, der mit einer Steckbuchse bzw. einem komplementären Steckverbinder des Stromnetzes 15 verbunden werden kann.

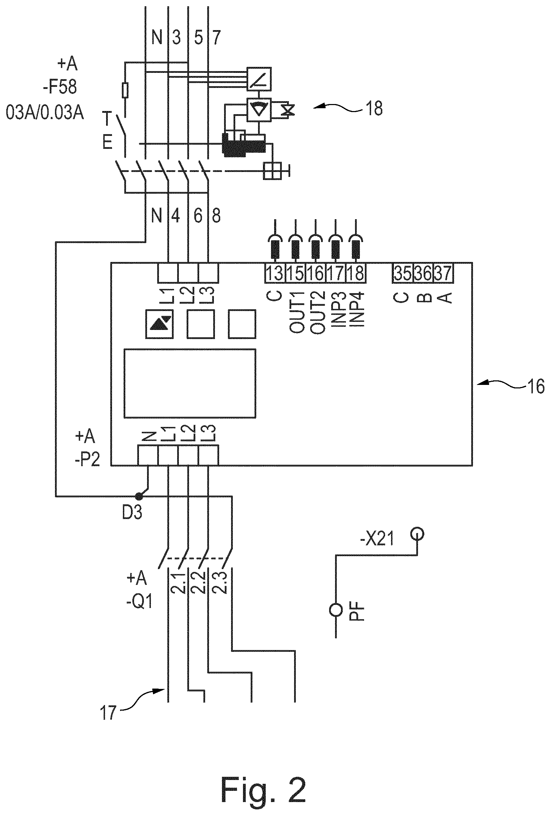

An dem Netzanschluss 14 bzw. einem Punkt des maschinenseitigen Stromkreises, durch den die gesamte Leistungsaufnahme der Materialumschlags- und/oder Baumaschine 1 vom Netzanschluss 14 her durchfließt, besitzt die Material- und/oder Baumaschine 1 eine Messeinrichtung 16 zum Messen der gesamten elektrischen Leistungsaufnahme aus dem Stromnetz 15, vgl. Fig. 1 und Fig. 2. Bei der üblicherweise mehrpoligen, beispielsweise vierpoligen Ausbildung der Netzanschlussleitung 17 kann die Messeinrichtung 16 an die Adern der Versorgungsleitung 17 angebunden sein, vgl. Fig. 2 und den gesamten Stromfluss durch die Netzversorgungsleitung 7 messen. Die Messeinrichtung 16 kann die Leistungsaufnahme in verschiedener Weise messen, beispielsweise den Stromfluss und/oder die Spannung messen und hierfür geeignete Messbausteine umfassen, vgl. Fig. 2.

Ferner ist am Netzanschluss 14 der Materialumschlags- und/oder Baumaschine 1 bzw. an der Messeinrichtung 16 und/oder einem Punkt des maschinenseitigen Stromnetzes, durch den die gesamte Leistungsaufnahme hindurchgeht, ein Schutzschalter 18 vorgesehen, der einen allstromsensitiven Fehlerstromschutzschalter umfassen kann. Ein solcher allstromsensitiver Fehlerstromschutzschalter 18 kann beispielsweise vierpolig ausgebildet sein, vgl. Fig. 2, um an die vierpolige Netzversorgungsleitung 17 angeschlossen werden zu können, und ggf. umrichterfest ausgebildet sein.

Das Messsignal der Messeinrichtung 16, welches die gesamte aktuelle Leistungsaufnahme der Maschine 1 angibt, wird vorteilhafterweise der Steuervorrichtung 8 bereitgestellt, welche die gesamte Leistungsaufnahme mit einem Grenzwert vergleichen kann, der in Abhängigkeit der maximal zur Verfügung stellbaren Leistung des jeweiligen Stromnetzes 15 bestimmt werden kann, beispielsweise mit der maximal zur Verfügung stehenden Netzleistung gleichgesetzt oder auf einen vorbestimmten Bruchteil hiervon eingestellt werden kann. Der genannte Grenzwert in Abhängigkeit der maximal zur Verfügung stellbaren Leistung des Stromnetzes 15 kann vorteilhafterweise über eine Eingabeschnittstelle der Steuervorrichtung 8 bereitgestellt werden.

Die Steuervorrichtung 8 ist vorteilhafterweise dazu ausgebildet, die aktuelle tatsächliche, gemessene Leistungsaufnahme der Maschine 1 mit der maximal zur Verfügung stellbaren Leistung bzw. dem genannten Grenzwert, der über die Eingabeschnittstelle eingegeben wurde, zu vergleichen, um ggf. in der eingangs beschriebenen Weise eine Leistungsreduzierung für die elektrischen Antriebe 11, 12, 13 vorzusehen.

Alternativ oder zusätzlich kann die Steuervorrichtung 8 auch einen Energieversorgungsspeicher 19 der Energieversorgungseinrichtung 10 zuschalten und/oder die Leistungsentnahme aus einem solchen Speicher erhöhen, um eine Überlastung des Stromnetzes 15 zu verhindern. Ein solcher Energieversorgungsspeicher 19 kann eine Batteriezelle und/oder einen Kondensator oder mehrere Gruppen oder Mischformen hiervon umfassen, wobei der Energiespeicher 19 unabhängig hiervon an der Materialumschlags- und/oder Baumaschine 1 vorgesehen sein kann. Gegebenenfalls kann auch ein separater Energieversorgungsspeicher, beispielsweise in Form eines Speichercontainers am Aufstellort der Maschine bereitgestellt und mit der Maschine verbunden werden.

## Patentansprüche

1. Materialumschlags- und/oder Baumaschine, insbesondere Hebezeug wie Kran, mit mehreren elektrischen Antrieben (11, 12, 13) zum Antreiben von Arbeitsaggregaten (4, 6) und/oder Strukturbauteilen (3) der Materialumschlags- und/oder Baumaschine, einer Steuervorrichtung (8) zum Steuern der Antriebe (11, 12, 13), sowie einer Energieversorgungseinrichtung (10) zum Versorgen der elektrischen Antriebe (11, 12, 13) mit elektrischer Energie, wobei die Energieversorgungseinrichtung (10) einen Netzanschluss (14) zum Anschließen an ein Stromnetz (15) und Beziehen der elektrischen Energie aus dem Stromnetz (15) aufweist, sowie einer Messeinrichtung (16) zum Messen der gesamten elektrischen Leistungsaufnahme der Materialumschlags- und/oder Baumaschine aus dem Stromnetz (15) an dem maschinenseitigen Netzanschluss (14) **dadurch gekennzeichnet, dass** die Steuervorrichtung (8) dazu ausgebildet ist, die gemessene, gesamte elektrische Leistungsaufnahme mit einer vom Stromnetz maximal zur Verfügung stellbaren Leistung und/oder einem davon abhängigen Grenzwert zu vergleichen und in Abhängigkeit dieses Vergleichs die Leistungsaufnahme eines oder mehrerer elektrischer Antriebe (11, 12, 13) zu begrenzen und Steuerbefehle, die zum Steuern der elektrischen Antriebe von einem Maschinenführer eingegeben und/oder von einem Maschinensteuermodul generiert wurden, in Abhängigkeit des genannten Vergleichs zu skalieren und auf einen reduzierten Maximalwert zu begrenzen.

2. Materialumschlags- und/oder Baumaschine nach dem vorhergehenden Anspruch, wobei die Steuervorrichtung (8) dazu ausgebildet ist, eine oder mehrere Stellgeschwindigkeiten eines oder mehrerer elektrischer Antriebe (11, 12, 13) zu reduzieren und einen Stellgeschwindigkeitsbefehl, der einen darüber hinausgehenden Stellgeschwindigkeitswunsch angibt, zu übersteuern.

3. Materialumschlags- und/oder Baumaschine nach einem der vorhergehenden Ansprüche, wobei die Steuervorrichtung (8) dazu ausgebildet ist, in Abhängigkeit des genannten Vergleichs einen Energieversorgungsspeicher (19) der Materialumschlags- und/oder Baumaschine zuzuschalten und/oder die Leistungsentnahme aus dem Energieversorgungsspeicher zum Versorgen der elektrischen Antriebe (11, 12, 13) zu erhöhen, wenn die gemessene tatsächliche gesamte Leistungsaufnahme der Materialumschlags- und/oder Baumaschine (1) die maximal zur Verfügung stellbare Leistung des Stromnetzes (15) oder den daraus abgeleiteten Grenzwert oder einen vorbestimmten Bruchteil hiervon erreicht.

4. Materialumschlags- und/oder Baumaschine nach einem der vorhergehenden Ansprüche, wobei die Steuervorrichtung (8) eine Eingabe-Schnittstelle zum Eingeben der maximal zur Verfügung stellbaren Leistung des jeweils anzuschließenden Stromnetzes (15) aufweist.

5. Materialumschlags- und/oder Baumaschine nach einem der vorhergehenden Ansprüche, wobei an dem Netzanschluss (14) maschinenseitig ein auf das jeweils anzuschließende Stromnetz abgestimmter Schutzschalter (18) vorgesehen ist, über den die gesamte vom Stromnetz (15) bezogene Leistungsaufnahme der Materialumschlags- und/oder Baumaschine (1) läuft.

6. Materialumschlags- und/oder Baumaschine nach dem vorhergehenden Anspruch, wobei der Schutzschalter (18) einen allstromsensitiven Fehlerstrom-Schutzschalter umfasst.

7. Materialumschlags- und/oder Baumaschine nach dem vorhergehenden Anspruch, wobei der allstromsensitive Fehlerstrom-Schutzschalter mehrpolig ausgebildet ist und an die Adern der Netzversorgungsleitung (17) der Materialumschlags- und/oder Baumaschine (1) angeschlossen ist.

8. Materialumschlagsmaschine nach einem der drei vorhergehenden Ansprüche, wobei der Schutzschalter (18) hinsichtlich seines Bemessungsfehlerstroms, bei dessen Erreichen der Schutzschalter (18) abschaltet, einstellbar ausgebildet ist.

## Claims

1. Material-handling and/or construction machine, in particular lifting equipment such as a crane, having a plurality of electric drives (11, 12, 13) for driving working assemblies (4, 6) and/or structural components (3) of the material-handling and/or construction machine, a control device (8) for controlling the drives (11, 12, 13), and an energy supply device (10) for supplying the electric drives (11, 12, 13) with electrical energy, wherein the energy supply device (10) has a grid connection (14) for connection to a power grid (15) and for drawing the electrical energy from the power grid (15), as well as a measuring device (16) for measuring the total electrical power consumption of the material-handling and/or construction machine from the power grid (15) at the machine-side grid connection (14), **characterized in that** the control device (8) is configured to compare the measured total electrical power consumption with a power maximally providable by the power grid and/or a limit value dependent thereon and, depending on this comparison, to limit the power consumption of one or more electric drives (11, 12, 13) and to scale control commands, which were input by a machine operator for controlling the electric drives and/or were generated by a machine control module, depending on said comparison and to limit them to a reduced maximum value.

2. Material-handling and/or construction machine according to the preceding claim, wherein the control device (8) is configured to reduce one or more actuation speeds of one or more electric drives (11, 12, 13) and to override an actuation-speed command that indicates an actuation-speed request exceeding this.

3. Material-handling and/or construction machine according to one of the preceding claims, wherein the control device (8) is configured, depending on said comparison, to switch in an energy supply storage device (19) of the material-handling and/or construction machine and/or to increase the power withdrawal from the energy supply storage device for supplying the electric drives (11, 12, 13) when the measured actual total power consumption of the material-handling and/or construction machine (1) reaches the maximally providable power of the power grid (15) or the limit value derived therefrom or a predetermined fraction thereof.

4. Material-handling and/or construction machine according to one of the preceding claims, wherein the control device (8) has an input interface for inputting the maximally providable power of the respective power grid (15) to be connected.

5. Material-handling and/or construction machine according to one of the preceding claims, wherein a circuit breaker (18), matched to the respective power grid to be connected, is provided on the machine side at the grid connection (14), through which circuit breaker the entire power consumption of the material-handling and/or construction machine (1) drawn from the power grid (15) passes.

6. Material-handling and/or construction machine according to the preceding claim, wherein the circuit breaker (18) comprises a universal-current-sensitive residual-current circuit breaker.

7. Material-handling and/or construction machine according to the preceding claim, wherein the universal-current-sensitive residual-current circuit breaker is of multipole design and is connected to the conductors of the grid supply line (17) of the material-handling and/or construction machine (1).

8. Material-handling machine according to one of the three preceding claims, wherein the circuit breaker (18) is configured to be adjustable with regard to its rated residual current, upon reaching which the circuit breaker (18) trips.

## Revendications

1. Machine de manutention de matériaux et/ou de construction, en particulier engin de levage tel qu'une grue, comprenant plusieurs entraînements électriques (11, 12, 13) destinés à entraîner des organes de travail (4, 6) et/ou des éléments structuraux (3) de la machine de manutention de matériaux et/ou de construction, un dispositif de commande (8) destiné à commander les entraînements (11, 12, 13), ainsi qu'un dispositif d'alimentation en énergie (10) destiné à alimenter les entraînements électriques (11, 12, 13) en énergie électrique, le dispositif d'alimentation en énergie (10) présentant un raccordement au réseau (14) destiné au raccordement à un réseau électrique (15) et au prélèvement de l'énergie électrique à partir du réseau électrique (15), ainsi qu'un dispositif de mesure (16) destiné à mesurer la puissance électrique absorbée totale de la machine de manutention de matériaux et/ou de construction à partir du réseau électrique (15) au niveau du raccordement au réseau (14) côté machine, **caractérisée en ce que** le dispositif de commande (8) est configuré pour comparer la puissance électrique absorbée totale mesurée avec une puissance pouvant être mise à disposition au maximum par le réseau électrique et/ou avec une valeur limite dépendant de celle-ci et, en fonction de cette comparaison, pour limiter la puissance absorbée d'un ou de plusieurs entraînements électriques (11, 12, 13) et pour mettre à l'échelle des ordres de commande qui ont été saisis par un conducteur de machine pour commander les entraînements électriques et/ou générés par un module de commande de machine, en fonction de ladite comparaison, et pour les limiter à une valeur maximale réduite.

2. Machine de manutention de matériaux et/ou de construction selon la revendication précédente, dans laquelle le dispositif de commande (8) est configuré pour réduire une ou plusieurs vitesses de réglage d'un ou de plusieurs entraînements électriques (11, 12, 13) et pour outrepasser un ordre de vitesse de réglage qui indique un souhait de vitesse de réglage allant au-delà de celle-ci.

3. Machine de manutention de matériaux et/ou de construction selon l'une des revendications précédentes, dans laquelle le dispositif de commande (8) est configuré, en fonction de ladite comparaison, pour connecter un accumulateur d'alimentation en énergie (19) de la machine de manutention de matériaux et/ou de construction et/ou pour augmenter le prélèvement de puissance à partir de l'accumulateur d'alimentation en énergie afin d'alimenter les entraînements électriques (11, 12, 13), lorsque la puissance absorbée totale effective mesurée de la machine de manutention de matériaux et/ou de construction (1) atteint la puissance pouvant être mise à disposition au maximum par le réseau électrique (15) ou la valeur limite dérivée de celle-ci ou une fraction prédéterminée de celle-ci.

4. Machine de manutention de matériaux et/ou de construction selon l'une des revendications précédentes, dans laquelle le dispositif de commande (8) présente une interface d'entrée destinée à saisir la puissance pouvant être mise à disposition au maximum du réseau électrique (15) respectif à raccorder.

5. Machine de manutention de matériaux et/ou de construction selon l'une des revendications précédentes, dans laquelle un disjoncteur de protection (18), adapté au réseau électrique respectif à raccorder, est prévu côté machine au niveau du raccordement au réseau (14), par l'intermédiaire duquel passe toute la puissance absorbée de la machine de manutention de matériaux et/ou de construction (1) prélevée du réseau électrique (15).

6. Machine de manutention de matériaux et/ou de construction selon la revendication précédente, dans laquelle le disjoncteur de protection (18) comprend un disjoncteur différentiel sensible à tous courants.

7. Machine de manutention de matériaux et/ou de construction selon la revendication précédente, dans laquelle le disjoncteur différentiel sensible à tous courants est réalisé de manière multipolaire et est raccordé aux conducteurs de la ligne d'alimentation réseau (17) de la machine de manutention de matériaux et/ou de construction (1).

8. Machine de manutention de matériaux selon l'une des trois revendications précédentes, dans laquelle le disjoncteur de protection (18) est réalisé de manière réglable en ce qui concerne son courant différentiel assigné, lorsque celui-ci est atteint, le disjoncteur de protection (18) déclenche.
